## Europäisches Patentamt
## European Patent Office
## Office européen des brevets

(11) Veröffentlichungsnummer: **0 065 272**
**B1**

(12) # EUROPÄISCHE PATENTSCHRIFT

(45) Veröffentlichungstag der Patentschrift:
03.08.88

(21) Anmeldenummer: **82104134.0**

(22) Anmeldetag: **12.05.82**

(51) Int. Cl.⁴: **G 06 F 13/36,** G 06 F 13/42,
G 06 F 11/00, G 06 F 11/16

(54) **Mehrrechnersystem.**

(30) Priorität: **15.05.81 DE 3119457**

(43) Veröffentlichungstag der Anmeldung:
**24.11.82 Patentblatt 82/47**

(45) Bekanntmachung des Hinweises auf die Patenterteilung:
**03.08.88 Patentblatt 88/31**

(84) Benannte Vertragsstaaten:
**FR GB IT NL**

(56) Entgegenhaltungen:
EP - A - 0 065 273
DE - A - 2 729 279
US - A - 3 657 700

IBM TECHNICAL DISCLOSURE BULLETIN, Band 22, Nr. 10, März 1980, NEW YORK (US), S. 4485-4487, RIVERO: "Error detection capabilities in microprocessors"
IBM TECHNICAL DISCLOSURE BULLETIN, Band 21, Nr. 9, Februar 1979, NEW YORK (US), S. 3712-3715, LEBDA: "Multiple channel protocol for microprocessors"
IBM TECHNICAL DISCLOSURE BULLETIN, Band 22, Nr. 10, März 1980, NEW YORK (US), S. 4427-28, CURLANDER et al.: "Gray coded communication controls"
SIXTH EUROMICRO SYMPOSIUM ON MICROPROCESSING AND MICROPROGRAMMING.

(73) Patentinhaber: **Siemens Aktiengesellschaft Berlin und München, Wittelsbacherplatz 2, D-8000 München 2 (DE)**

(72) Erfinder: **Schürlein, Bernhard, Dr., In der Ruhstatt 19, D-6252 Diez (DE)**

(56) Entgegenhaltungen: (Fortsetzung)
September 16-18, 1980, LONDON (GB), North-Holland Publishing Company, Amsterdam, New York, Oxford. S. 149-156, CONTE et al.: "Software development and debug aids for the mu-multi-microprocessor system"
ELECTRONICS, Band 50, Nr. 19, September 15, 1977, NEW YORK (US), S. 127-130, MICK et al.: "MOS support micro-processor teams with bit-slice prototypes for easier microprogram debugging"

**Beschreibung**

Die Erfindung bezieht sich auf ein Mehrrechnersystem, bestehend aus einem anwendungsbezogenen System und einem Software-Entwicklungssystem, insbesondere mit mehreren Mikrorechnern, deren Systemkomponenten durch ein Informationsleitungen und Steuerleitungen umfassendes Busleitungssystem (Kommunikationsbus) miteinander verknüpft sind und mit einer an das Busleitungssystem angeschlossenen zentralen Steuereinrichtung.

Mehrrechnersysteme auf der Basis von Mikrorechnern, deren funktioneller Ablauf zentral gesteuert wird, steht die Verwendung in einer grossen Vielfalt von Einsatzspektren offen. Die Vorteile derartiger Strukturen sind die funktionelle Aufteilung von Hardware und Software und die Erweiterbarkeit. Durch Verbesserung der Hardware kann der Software-Anteil bei den Übertragungsprozeduren verringert und die Übertragungsrate erhöht werden.

Der Aufbau eines Mehrrechnersystems wird wesentlich durch das Kommunikationssystem bestimmt, das die einzelnen Rechner untereinander verbindet und den Datenaustausch zwischen diesen ermöglicht. Ein grosser Teil der Rechnersysteme verwendet Bus-Systeme unterschiedlicher Ausbildung und Leistungsfähigkeit. Das sogenannte Uni-Bus-System arbeitet mit einer gemeinsamen Sammelschiene zwischen den Rechnern, über die die gesamte Kommunikation erfolgt. Dem Vorteil des geringen Aufwandes und der einfachen Erweiterbarkeit dieses Bus-Systems steht der begrenzte Durchsatz und der totale Ausfall bei Auftreten eines Fehlers in der Bus-Steuerung entgegen. Derartige Mehrrechnersysteme mit zugehörigem Bus-System sind bekannt (Electronik, 1979, Ein Multi-Mikrocomputersystem am Arbeitsplatz, 1. Teil, Heft 19, Seiten 87 bis 90, 2. Teil, Heft 20, Seiten 73 bis 77).

Aus der Zeitschrift «Eletronics», Band 50, Nr. 19, 15. Sept. 1977, Seiten 127–130 ist ein System bekannt, bei dem ein anwendungsbezogenes System und ein Software-Entwicklungssystem über einen Kommunikationsbus unter Zwischenschaltung einer Schnittstellenanpassung verkoppelt sind.

Aus der DE-A-27 29 279 ist ein Bus-Controller bekannt, der den Informationsaustausch auf einem Bus steuert.

In der Druckschrift «6. Euromicro Symposium on Microprocessing and Microprogramming», 16.–18. Sept. 1980, Seiten 149–156 ist ein Mehrrechnersystem bekannt, das zusätzlich zu einem Global-Bus für jeden der Rechner je einen eigenen Privat-Bus aufweist, über den diese Rechner mit den ihnen zugeordneten Speichern verbunden sind.

Aus «IBM Technical Disclosure Bulletin», Band 22, Nr. 10, März 1980, Seiten 4485–87 ist es bekannt die Anzahl der Steuerleitungen zur Verbesserung der Fehlersicherheit zu verdoppeln.

In der US-A-3 657 700 wird ein Vorwärtsfehlerkorrektursystem beschrieben, das bei einem Encoder-Decoder-Übertragungssystem verwendet wird.

Aus «IBM Technical Disclosure Bulletin», Band 21, Nr. 9, Feb. 1979, Seiten 3712–15 ist ein Multiprocessor-System bekannt, bei dem die Übertragung von Daten u.a. in einem festen Zeitraster erfolgt.

Aus «IBM Technical Disclosure Bulletin» Band 22, Nr. 10, März 1980, Seiten 4427–28 ist es bekannt, eine Informationsübertragung mit Hilfe der Leitungszustände auf drei Steuerleitungen zu steuern.

Der Erfindung liegt die Aufgabe zugrunde, ein kostengünstiges Mehrrechnersystem der eingangs genannten Art mit hoher Verfügbarkeit und Erweiterbarkeit anzugeben, in dem der Aufwand für die Software-Entwicklung bei guter Testunterstützung möglichst klein gehalten werden kann und das ausserdem eine erhöhte Fehlersicherheit ermöglicht.

Diese Aufgabe wird erfindungsgemäss durch die im Patentanspruch 1 angegebenen Merkmale gelöst.

Vorteile der Trennung des anwendungsbezogenen Systems vom Software-Entwicklungssystem bestehen vor allem darin, dass nur ein anwendungsbezogenes Programm für die Rechner des Anwendungssystems entwickelt werden muss, während die Untersützungsprogramme in Entwicklungssystemen für viele Anwendungen wiederverwendet werden können. Ausserdem kann der Rechner des Entwicklungssystems, der ein kommerziell erhältlicher Rechner sein kann, und seine Peripherieausstattung bei anderen Projekten weiter verwendet werden. Infolge der Kopplung von Anwendungssystem und Entwicklungssystem über denselben Kommunikationsbus, der auch die Verbindung innerhalb des Anwendungssystems realisiert, kann die Anforderung an die Testschnittstelle, eine Dokumentation und Beeinflussung des Programmablaufs ohne wesentliche Beeinflussung des Realzeitverhaltens zuzulassen, in besonders einfacher Weise erfüllt werden. Über eine solche Testschnittstelle kann z.B. vom Entwicklungsrechner der Programmablauf im Anwendungssystem an bestimmten auswählbaren Adressen angehalten bzw. fortgesetzt werden und der gesamte Zustand des Anwendungssystems gelesen und modifiziert werden.

Gemäss einer vorteilhaften Weiterbildung der Erfindung kann das Busleitungssystem (Kommunikationsbus) im Anwendungssystem für wenigstens einen Teil seiner Rechner zusätzlich mit je einem eigenen privaten Bus ausgerüstet werden, der diese Rechner mit dem ihnen zugeordneten Speicher verbindet.

Ein anderer Vorteil besteht darin, dass jede Speicher- und Peripherieeinheit bei einem Ausfall ihres Rechners verfügbar bleiben kann, wenn sie zusätzlich auch am Kommunikationsbus angeschlossen ist. Eine solche Struktur ermöglicht einen hohen Durchsatz für den Verkehr zwischen jedem Rechner und dessen Speicher. Sie erlaubt aber auch die Weiterbenutzung der Komponenten über den Kommunikationsbus, wenn ein privater Bus ausfällt. Hierfür ist es erforderlich, dass über den Kommunikationsbus notfalls der gesamte Speicher- und Peripherieverkehr eines Rechners abgewickelt werden kann.

Um beim Ausfall einzelner Systemkomponenten den Kommunikationsbus funktionstüchtig zu halten, wird gemäss einer weiteren Ausgestaltung der Erfindung die Anzahl der Steuerleitungen im Kommunikationsbus zur Verbesserung der Ausfallsicherheit durch Vervielfachung dieser Anzahl mit erhöhter Redundanz bemessen und auf den Informationsleitungen des Kommunikationsbus die Verwendung einer Vorwärtsfehlerkorrektur vorgeschlagen.

Infolge der sich hieraus ergebenden Erhöhung der Anzahl der Leitungen eines Kommunikationsbus sowie des Aufwandes für Sende- und Empfangsschaltungen mit Fehlerkorrekturlogik ist es vorteilhaft, gemäss einer weiteren Ausgestaltung der Erfindung Adresse, Daten, Anforderungen und Steuerinformationen in einem festen Zeitraster im Zeitmultiplexverfahren über dieselben Informationsleitungen des Kommunikationsbus zu übertragen. Diese Forderung hat bei der erforderlichen Buslänge und Übertragungsgeschwindigkeit keine Probleme durch Laufzeiteffekte zur Folge. Die Taktzeit des Zeitrasters kann dabei an die Buslänge angepasst werden.

Die dem Kommunikationsbus zugeordneten privaten Busleitungen sind so ausgebildet, dass jeder nur jeweils ein Rechner zugeordnet ist. Dadurch entstehen keine Buszugriffskonflikte. Jeder Rechner kann über den privaten Bus auf die ihm zugeordnete Speicher- oder Peripherieeinheit zugreifen und warten, bis die angesprochene Systemkomponente antwortet. Die Übertragung auf dem privaten Bus erfolgt dabei im Handshake-Timing.

Am Kommunikationsbus sind dagegen stets mehrere Rechner angeschlossgen, deren Anforderungen an die anderen Systemkomponenten über das Busleitungssystem sich nicht gegenseitig beeinträchtigen dürfen. Die Informationsübertragung auf dem Kommunikationsbus erfolgt im festen Zeitraster, wobei eine zentrale Schaltung (Arbeiter) die Regelung der Buszugriffe vornimmt. Alle Informationsübertragungen auf dem Kommunikationsbus erfolgen in einer Richtung, derart, dass beim Lesen aus einem Speicher nur der Lesewunsch und die Adresse übertragen wird und dass der Speicher den Speicherinhalt in einem weiteren Buszyklus zurückmeldet, sobald dieser verfügbar ist. Auf diese Weise bleibt ein hoher Busdurchsatz auch beim Anschluss langsamer Geräte erhalten.

Die Erfindung und weitere Einzelheiten der Erfindung werden anhand der Figuren 1 bis 3 näher erläutert.

Es zeigen

Fig. 1 ein Prinzipschaltbild eines Mehrrechnersystems gemäss der Erfindung,

Fig. 2 und 3 eine Darstellung einer Vierphasensteuerung unter Verwendung von zwei oder mehr Leitungen.

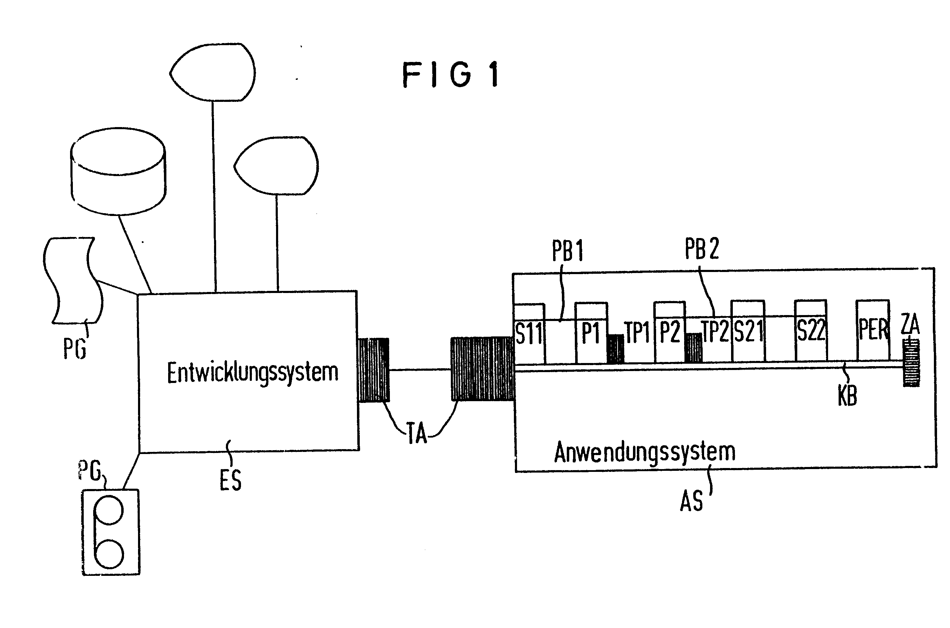

Die Fig. 1 zeigt die Aufteilung eines Mehrrechnersystems in ein Anwendungssystem AS und ein Entwicklungssystem ES, die durch eine Testschnittstellenanpassung TA miteinander verkoppelt sind. Das Anwendungssystem besteht aus einer Mehrrechneranlage von z.B. 2 bis 10 Rechnern P1, P2 und eine Anzahl von weiteren Systemkomponenten, z.B. Speicher S1.1, S2.1, S2.2, Peripheriegeräten PER. Die Verknüpfung der einzelnen Systemkomponenten, wie Rechner, Speicher und Peripheriegeräte erfolgt durch einen Systembus, der aus einem Kommunikationsbus KB und einer oder mehreren privaten Busleitungen PB gebildet wird. In der Verbindungsstruktur, die diesen Systembus bildet, ist eine Redundanz vorgesehen, damit im Anwendungssystem nicht nur spezielle Teilausfälle überbrückt werden können.

Das Entwicklungssystem ES dient der Entwicklung von Software für das Anwendungssystem. Die Bestandteile des Entwicklungssystems ES sind im wesentlichen ein handelsüblicher Entwicklungsrechner und eine Anzahl von Peripheriegeräten PG.

Die für sich selbständigen Systeme AS und ES sind über die Testschnittstellenanpassung TA miteinander verbunden, die eine Dokumentation und Beeinflussung des Programmablaufes ohne wesentliche Beeinflussung des Realzeitverhaltens zulässt. Über diese Testschittstellenanpassung TA kann z.B. vom Entwicklungsrechner ES der Programmablauf im Anwendungssystem AS an bestimmten auswählbaren Adressen angehalten bzw. fortgesetzt werden und der vollständige Zustand des digitalen Feuerleitsystems des Anwendungssystems AS ermöglicht den Anschluss einer einheitlichen Testschnittstelle an das Zielsystem. Der Anschluss kann dabei in solcher Weise erfolgen, dass im Einsatz keine Komponenten, die nur dem Test und der Erprobung dienen, im System verbleiben.

Die im Anwendungssystem AS neben dem Kommunikationsbus KB vorgesehenen privaten Busleitungen PB verbinden jeweils einen Rechner mit einem oder mehreren ihm unmittelbar zugeordneten Speichern, z.B. Rechner P1 und Speicher S1.1 oder Rechner P2 und Speicher S2.1, S2.2. Die gleichzeitige Verwendung des als Kommunikationsbus bezeichneten gemeinsamen Leitungssystems KB und der privaten Busleitungen PB der einzelnen Anwendungsrechner ermöglichen den Aufbau hierarchie freier Mehrrechner-Systeme aus verschiedenen Anwendungsrechnertypen. Die privaten Busleitungen, über die ein Rechner, z.B. P1, jederzeit ohne Buszugriffszugriffskonflikte auf die Zielrechner spezifischen Programme und lokalen Daten in privaten Speichern, z.B. in S1.1, zugreifen kann, vermindern die Überlastungsgefahr des Kommunikationsbus wesentlich, insbesondere in grossen Systemen. Über Busanpassungen TP1, TP2 sind die Rechner und gegebenenfalls Speicher mit dem Kommunikationsbus KB verbunden. Darüber wird eine direkte Kommunikation zwischen den Rechnern, z.B. P1 mit P2, ein Informationsaustausch über am Kommunikationsbus angeschlossene Speicher, z.B. S1.1, sowie der Zugriff auf gemeinsam benutzte Peripheriegeräte PG ermöglicht.

Die Benutzung des Kommunikationsbus KB durch mehrere gleichgestellte Rechner erfordert eine Regelung der Buszugriffe. Sie erfolgt durch eine zentrale Schaltung, dem Arbiter ZA, der die Übertragung auf den Kommunikationsbus in einem festen Zeitraster steuert.

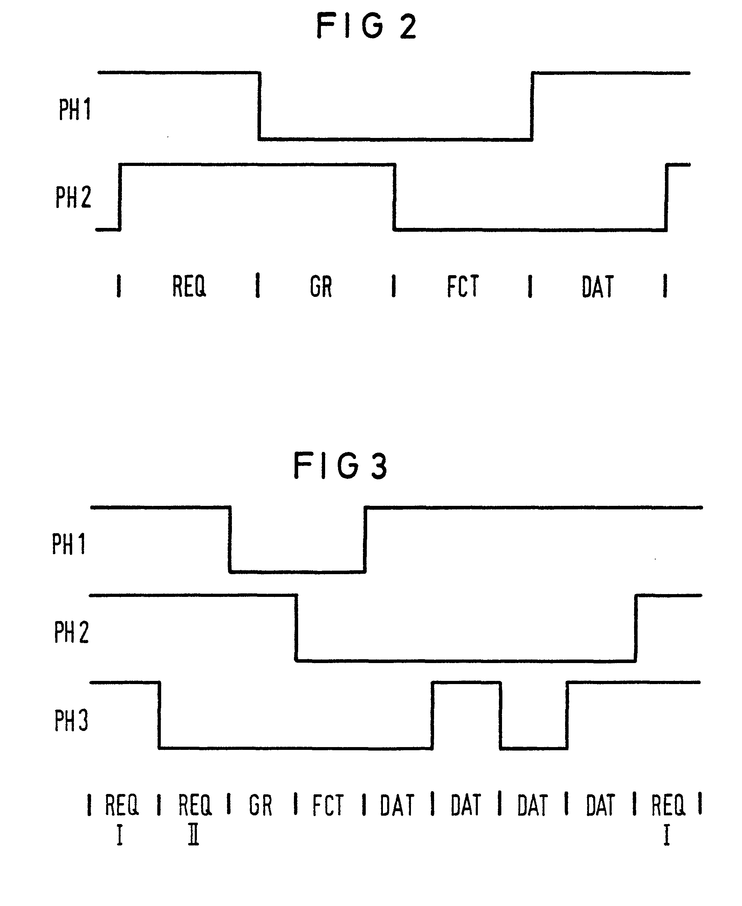

Die Wirkungsweise der zentralen Bus-Zugriffssteuerung wird anhand der Figuren 2 und 3 näher erläutert.

Der eigentlichen Ausführung von Funktionen des Kommunikationsbus über dessen Informationsleitungen, wie z.B. Lesen oder Schreiben, muss die Steuerung der Übertragungsphasen auf dem Kommunikationsbus vorausgehen. In einer einfachen Lösung werden zur Steuerung vier Phasen benötigt, z.B. die Anforderungsphase, die Zugriffserlaubnis, die Funktion und Zielangabe und die Daten- und Quellenangabe. Eine einfache Vier-Phasensteuerung unter Verwendung von zwei Leitungen ist in Fig. 2 dargestellt. Durch den jeweiligen Leitungszustand PH1 und PH2 auf den beiden Leitungen sind vier Übertragungsphasen eindeutig unterscheidbar. Die jeweilige Änderung eines Leitungszustandes, z.B. von hohem Potential auf Nullpotential oder umgekehrt, dient dabei als Taktsignal. Zwischen einer Änderung des Leitungszustandes, z.B. PH2 und einer darauf folgenden Änderung des Leitungszustandes PH1 liegt eine bestimmte Übertragungsphase, z.B. die mit REQ bezeichnete Anforderungsphase vor. Die übrigen Bezeichnungen GR, FCT, DAT betreffen die übrigen Übertragungsphasen, Zugriffserlaubnis, Funktion und Zielangabe und Daten- und Quellenangabe.

Eine erweiterte Vier-Phasensteuerung, bei der eine Leitungszustandsänderung einer dritten Leitung ausgenutzt wird, ist in Fig. 3 dargestellt. Der Leitungszustand PH3 der dritten Leitung wird nur dann verändert, wenn sich die Leitungszustände PH1 und PH2, welche die Übertragungsphase bestimmen, nicht ändern. Durch diese Erweiterung lässt sich die Leistungsfähigkeit des Leitungsbussystems verbessern, ohne dass ein zusätzlicher Takt erforderlich ist. Die Leistungsverbesserungen bestehen unter anderem darin, dass eine mehrstufige Anforderungsabfrage und/oder eine Wiederholung der Anforderungsphase, wenn keine Anforderungen vorliegen, erfolgen kann. Es ist auch eine mehrfache Wiederholung der Datenphase für grössere Datenmengen möglich. Eine Systemkomponente, die sich nur über Sammelleitung melden konnte, wird gespeichert und anschliessend in einem Suchvorgang identifiziert.

**Patentansprüche**

1. System bestehend aus einem anwendungsbezogenen System (AS), dessen Systemkomponenten (P1, P2, S11, S21, S22, PER) durch einen aus Informations- und Steuerleitungen bestehenden Kommunikationsbus (KB) verbunden sind, und aus einem Software-Entwicklungssystem (ES) mit dazugehöriger Peripherieausstattung (PG), wobei diese beiden Systeme durch Zwischenschaltung einer Testschnittstellenanpassung (TA) verkoppelt sind, dadurch gekennzeichnet, dass eine gemeinsame Buszugriffssteuerung (ZA) vorgesehen ist, dass die Übertragung von Adressen, Daten, Anforderungen und Steuerinformationen in einem festen Zeitraster im Zeitmultiplexverfahren über die Informationsleitungen und dass die Buszugriffssteuerung (ZA) mittels einer codierten Vierphasensteuerung über wenigstens zwei Steuerleitungen des Kommunikationsbus (KB) derart erfolgt, dass sich von Phase zu Phase jeweils ein Leitungszustand ändert, dass die Funktion des Kommunikationsbus (KB), z.B. Lesen, Schreiben, Übertragen durch mehrere Übertragungsphasen, z.B. Anforderungsphase, Zugriffsphase derart bestimmt ist, dass die Übertragungsphasen durch den Leitungszustand mehrerer Steuerleitungen des Kommunikationsbus (KB) eindeutig gekennzeichnet sind, dass die Anzahl der Steuerleitungen vervielfacht ist, und dass auf den Informationsleitungen eine Vorwärtsfehlerkorrektur verwendet wird.

2. System nach Anspruch 1, dadurch gekennzeichnet, dass zusätzlich zum Kommunikationsbus (KB) für wenigstens einen Teil der Systemkomponenten, z.B. Rechner (P1, P2) für den Anwendungsbetrieb je ein eigener privater Bus (PB1, PB2) vorgesehen ist, der diese Rechner (P1, P2) mit den ihnen zugeordneten Speichern (S11, S21, S22) verbindet.

3. System nach Anspruch 1 oder 2, dadurch gekennzeichnet, dass die Taktzeit des Zeitrasters an die Länge des Kommunikationsbus (KB) angepasst ist.

**Claims**

1. A system composed of an application-orientated system (AS), the system components (P1, P2, S11, S21, S22, PER) of which are connected by a communications bus (KB) comprising information- and control lines, and of a software development system (ES) with associated peripheral equipment (PG), where these two systems are coupled via a test interface matching unit (TA), characterised in that a common bus access control unit (ZA) is provided, that the transmission of addresses, data, requests and control informatio takes place in a fixed time slot pattern in accordance with a t.d.m, procedure via the information lines and that the bus access control (ZA) takes place by means of a coded four-phase control via at least two control lines of the communications bus (KB), in such manner that a line status in each case changes from phase to phase, that the function of the communications bus (KB), e.g. read-out, write-in, transmission in a plurality of transmission phases, e.g. request phase, access phase, is specified to be such that the transmission phases are clearly identified by the line status of a plurality of control lines of the communication bus (KB), that the number of control lines is made a plurality, and that a forwards fault correction is used on the information lines.

2. A system as claimed in claim 1, characterised in that in addition to the communications bus (KB), for at least a part of the system components, e.g. computers (P1, P2), for the application operation a respective individual private bus (PB1, PB2) is provided which connects these computers (P1, P2) to their assigned stores (S11, S21, S22).

3. A system as claimed in claim 1 or claim 2, characterised in that the clock time of the time slot pattern is matched to the length of the communications bus (KB).

**Revendications**

1.Système constitué par un système (AS) lié à l'utilisation et dont les composants (P1, P2, S11, S21, S22, PER) sont reliés par un bus de communication (KB) constitué par des lignes de transmission d'informations et des lignes de commande, et par un système (ES) de développement du logiciel auquel est associé un équipement périphérique (PG), ces deux systèmes étant couplés au moyen de l'interconnexion d'un adaptateur d'interface d'essai (TA), caractérisé par le fait qu'il est prévu un dispositif commun (ZA) de commande d'accès au bus, que la transmission d'adresses, de données, de demandes et d'informations de commande s'effectue dans une trame temporelle fixe selon le procédé de multiplexage temporel, par l'intermédiaire des lignes de transmission d'informations, et que la commande des accès au bus est réalisée à l'aide d'un système de commande codé à quatre phases, par l'intermédiaire d'au moins deux lignes de commande du bus de communication (KB) de telle sorte qu'un état des lignes varie respectivement d'une phase à l'autre, que la fonction du bus de communication (KB), par exemple la lecture, l'enregistrement, la transmission au moyen de plusieurs phases de transmission, par exemple la phase de demande, la phase d'accès, est déterminée par le fait que les phases de transmission sont caractérisées de façon nette par l'état de plusieurs lignes de commande du bus de communication (4), que le nombre des lignes de commande est multiplié, et qu'on utilise un dispositif de correction amont des erreurs dans les lignes de transmission d'informations.

2. Système suivant la revendication 1, caractérisé par le fait qu'en plus du bus de communication (KB) il est prévu, pour au moins une partie des composants du système, par exemple un ordinateur (T1, T2), pour le fonctionnement conforme à l'application, des bus privés particuliers respectifs (PB1, PB2), qui relient ces ordinateurs (P1, P2) aux mémoires (S11, S21, S22) qui leur sont associées.

3. Système suivant la revendication 1 ou 2, caractérisé par le fait que la période de cadence de la trame temporelle est adaptée à la longueur du bus de communication (KB).

FIG 1

PB 1

PB 2

S11 P1 TP1 P2 TP2 S21 S22 PER ZA

Entwicklungssystem

TA

Anwendungssystem

PG

PG

ES

AS

KB

0 065 272

# FIG 2

| | REQ | | GR | | FCT | | DAT | |

# FIG 3

| REQ | | REQ | | GR | | FCT | | DAT | | DAT | | DAT | | DAT | | REQ |
|  I  | |  II | | | | | | | | | | | | | |  I  |